# EUROPÄISCHE PATENTSCHRIFT

(11) **EP 3 574 574 B1**
(45) Veröffentlichungstag und Bekanntmachung des Hinweises auf die Patenterteilung: **17.02.2021**
(21) Anmeldenummer: 18720157.9
(22) Anmeldetag: 16.04.2018
(51) Int. Cl.: H02K 15/00, H02K 17/16

(54) **VERFAHREN ZUR HERSTELLUNG EINES KURZSCHLUSSLÄUFERS EINER ASYNCHRONMASCHINE**
METHOD FOR PRODUCING A SQUIRREL CAGE ROTOR OF AN ASYNCHRONOUS ENGINE
PROCÉDÉ DE FABRICATION D'UN ROTOR À CAGE D'ÉCUREUIL D'UNE MACHINE ASYNCHRONE

(30) Priorität: 09.05.2017 EP 17170213
(43) Veröffentlichungstag der Anmeldung: 04.12.2019
(73) Patentinhaber: Siemens Aktiengesellschaft, 80333 München (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(86) Internationale Anmeldenummer: PCT/EP2018/059623
(87) Internationale Veröffentlichungsnummer: WO 2018/206230

(56) Entgegenhaltungen:
- US-A- 6 088 906
- US-A1- 2013 291 373

## Beschreibung

Die Erfindung betrifft ein Verfahren zur Herstellung eines Kurzschlussläufers einer Asynchronmaschine, als auch die Asynchronmaschine selbst und deren Verwendung bei unterschiedlichen, vorzugsweise industriellen Anwendungen. Kurzschlussläufer dynamoelektrischer rotatorischer Maschinen werden im niedrigeren Leistungsbereich in Druckgusstechnik in einem Arbeitsgang hergestellt. Dieses stoffschlüssige Verfahren ist kostenintensiv, da die Druckgussformen teuer sind und vergleichsweise schnell verschleißen. Des Weiteren ist bei der Herstellung ein vergleichsweise hohes Maß an Streuung in der Qualität eines derartig hergestellten Kurzschlussläufers vorhanden. Dies äußert sich beispielsweise in der Veränderung der Qualität der Schmelze im Tiegel, durch Verunreinigungen der Schmelze während des Gießprozesses, durch Trennmittel bzw. Abrasion am Werkzeug, ebenso wie durch Lunkerbildung oder Spannungsrissbildung bei Abkühlung des Druckgusses.

Im höheren Leistungsbereich oder bei Sonderanwendungen dynamoelektrischer rotatorischer Maschinen, werden einzelne Leiterstäbe mit einem Kurzschlussring elektrisch und mechanisch verbunden. Dies geschieht beispielsweise durch Löt- oder Schweißvorgänge, wie dies der DE 34 13 519 C2 zu entnehmen ist, oder durch Einpressen, wie dies der US 6 088 906 A zu entnehmen ist.

Nachteilig dabei ist jedoch, dass bei diesen größeren dynamoelektrischen Maschinen Kurzschlussringe vorhanden sind, die eine umlaufende Lötwanne aufweisen, die beim Lötprozess komplett mit Lot zu füllen ist. Dabei wird lediglich das Volumen, des in der Lötwanne ragenden Volumen der Läuferstäbe nicht mit Lot gefüllt. Aufgrund des hohen Silberanteils im Lot ist dabei unter anderem eine Herstellung der Lötverbindung zwischen Läuferstäben und Kurzschlussring wirtschaftlich nicht besonders sinnvoll.
Um die, auch bei niedrigen Leistungsbereich auftretenden Qualitätsverluste zu beheben, wird beispielsweise unter Schutzgaseinfluss der Druckgussvorgang durchführt. Ebenso werden Werkzeuge mit mehreren Entlüftungsmöglichkeiten vorgesehen, oder es wird sogar ein Nachlegieren der Schmelze durchgeführt. Diese Eingriffe ermöglichen die Steigerung der Effizienz des Asynchronkäfigläufers, jedoch sind zur Festigkeit zusätzliche Maßnahmen notwendig, die insbesondere eine hohe Drehzahltauglichkeit beinhalten, wie z.B. Stützringe oder Einsatz von Legierungen um höhere Festigkeitswerte zu erhalten.

Ausgehend davon liegt der Erfindung die Aufgabe zugrunde, ein Verfahren zur Herstellung eines Kurzschlussläufers einer Asynchronmaschine zu schaffen, wobei sowohl die elektrischen Eigenschaften als auch die wirtschaftliche Art und Weise des Herstellverfahrens im Vordergrund stehen. Des Weiteren soll eine leistungsfähigere Verbindung von Läuferstäben und Kurzschlussringen einfach und effektiv herzustellen sein.
Die Lösung der gestellten Aufgabe gelingt durch ein Verfahren zur Herstellung eines Kurzschlussläufers einer Asynchronmaschine nach Anspruch 1.

Die Lösung der gestellten Aufgabe gelingt ebenfalls durch eine Asynchronmaschine mit einem Kurzschlussläufer hergestellt nach einem der erfindungsgemäßen Verfahren.
Die Lösung der gestellten Aufgabe gelingt ebenfalls durch Asynchronmaschinen, die bei Kompressoren, Förderantrieben oder Fahrzeugantrieben mit zumindest einer Asynchronmaschine versehen sind, die mit einem Kurzschlusskäfig versehen sind, das nach dem erfindungsgemäßen Verfahren hergestellt wurde. Erfindungsgemäß wird nunmehr anstelle des bekannten Druckgießverfahrens ein Kurzschlusskäfig, d.h. eine Verbindung der Leiterstäbe mit Kurzschlussringscheiben in einer Kombination aus Mikroschweißen und Warmumformung hergestellt.
Dabei werden zunächst die einzelnen Rotorbleche zu einem fertigen Rotorpaket gestapelt oder stanzpaketiert. In die vorhandenen Nuten des Rotors unabhängig davon, ob eine Nutschrägung vorliegt oder nicht, werden dabei ein erstes leitfähiges Material beispielsweise gezogene Kupferstäbe eingesetzt. Diese Leiterstäbe ragen dabei aus den Stirnflächen des Rotorpakets heraus. Um die Leiterstäbe positionsgenau im Rotorpaket und für den anschließenden Verbindungsprozess mit den Kurzschlussscheiben genau zu fixieren, ohne das Unwucht im Rotor entstehen, werden diese durch eine dementsprechende Haltevorrichtung, sei es eine Matrix etc., in ihrer Position gehalten. Die aus dem Blechpaket ragenden Stabenden der Leiterstäbe werden mit der Kurzschlussscheibe, die vorzugsweise aus Aluminium oder einer Aluminiumlegierung ist, elektrisch leitend verbunden und so die Kurzschlussringe dieses Käfigläufers geschaffen.

Dieses Verbinden geschieht durch ein axiales Einpressen der Kurzschlussringscheibe auf die Leiterstäbe oder der Leiterstäbe auf die Kurzschlussringscheibe oder gegenseitiges axiales Einpressen, wobei sich Leiterstab/Leitstäbe und Kurzschlussringscheibe aufeinander zubewegen. Die Leiterstäbe ragen dabei auf der jeweiligen Stirnseite des Rotorblechpakets heraus.

Dieses axiale Einpressen geschieht unter Berücksichtigung des idealen Temperaturbereichs zur Formänderung sowie der optimalen Formänderungsgeschwindigkeit. Eine plastische Verformung findet dabei durch Versetzungswanderung der Atomebenen im Gitter statt. Diese Wanderung und somit das Überwinden von Hindernissen im Atomgitter (wie zum Beispiel Stufenversetzungen, Fremdatome etc.)wird durch eine Temperaturerhöhung begünstigt. So steigt ab einer bestimmten, materialabhängigen Temperaturgrenze das Formänderungsvermögen an. Die Umformgeschwindigkeit, die Temperatur und die Fließspannung des jeweiligen Materials sind somit aufeinander abzustimmen.

Dabei bildet sich zwischen dem Material der Kurzschlussringscheibe und den Leiterstäben eine Mikroverschweißung. Diese Mikroschweißung entsteht dadurch, dass der Leiterstab und der Kurzschlussring fest aufeinander reiben und somit eine Flächenpressung und zusätzliche Reibungswärme generieren. Dabei werden die zulässigen Scherspannungen dieser Materialien lokal überschritten und es werden Stoffübergänge durch Diffusion an der Grenzfläche zwischen Leiterstab und Kurzschlussring verursacht. Die Folge davon sind Aufschweißungen im Mikrobereich sowie Mikroschweißungen.

Die Kurzschlussringscheibe muss geometrisch betrachtet nicht zwangsläufig hohlzylindrisch ausgeführt sein. Lediglich im Bereich der Leiterstäbe ist so viel Material vorzusehen, dass eine ausreichende Kontaktierung und Fixierung der Leiterstäbe im Kurzschlussring erfolgt, so dass ein hocheffizienter Kurzschlusskäfig des Rotors entsteht.

Die Kurzschlussringscheibe/Kurzschlussring wird über die Rekristallisationstemperatur ihres/seines Materials erwärmt, wodurch ein Warmumformen unter vergleichsweise geringer Krafteinwirkung möglich ist.

Das Umformen führt zu einem verspannten Gitter. Das Material verfestigt sich. Bei hoher Temperatur finden im Material Erholungs- und Rekristallisationsvorgänge statt. Die damit einhergehende Änderung der Versetzungsanordnung führt wieder zur Entfestigung des Materials. Dieser Vorgang erfordert jedoch Zeit, die mit steigender Umformgeschwindigkeit verringert wird.

Das bedeutet, dass mit zunehmender Umformgeschwindigkeit immer weniger Zeit für Erholungs- und Rekristallisationsvorgänge zur Verfügung steht. Somit ist bei der Warmumformung eine geschwindigkeitsabhängige Fließspannung im Material gegeben.

Somit sind Umformgrad, Umformgeschwindigkeit, Temperatur und Fließspannung abhängig vom eingesetzten Material für den erfindungsgemäßen Umformprozess aufeinander abzustimmen. Die Fließspannung darf dabei jedoch nicht zu hoch sein.

Dabei ist die angestrebte Temperatur für reines Al 99,7 im Temperaturbereich von 350 bis 400°C. Für die sogenannten Al-Knetlegierungen liegen diese Temperaturen aufgrund der Legierungsbestandteile im Bereich von 400 bis 500°C. Durch die axiale Einpresskraft der Kurzschlussringscheibe auf die Leiterstäbe versinken nunmehr die Leiterstäbe in der "teigigen" Masse der Kurzschlussringscheiben. Während dieses Fügens kommt es an den Berührungsflächen zwischen den Leiterstäben und den Kurzschlussringscheiben zur oben erwähnten Mikroverschweißung. Gleichzeitig wird der Kurzschlussring durch eine Warmumformung entsprechend der vorgegebenen Werkzeugkontur, die den Kurzschlussring hält, ausgeformt. Die Werkzeugkontur kann dabei über einen vorgegebenen Temperaturbereich beheizbar sein.

Durch Aufbringung der axialen Fügekraft wird gleichzeitig das gestapelte Blechpaket in axialer Richtung verdichtet und verfestigt. Nach Abschluss des oben beschriebenen Fügevorgangs bleibt das Rotorblechpaket im verspannten Zustand, da die Stäbe mit den Kurzschlussringscheiben an den Stirnseiten des Rotorblechpakets stoffschlüssig verbunden sind. Ein zusätzlicher Formschluss ist somit nicht erforderlich.

Allgemein handelt es sich bei den Knetlegierungen um Materialzusammensetzungen, die eine hohe Duktilität (plastische Verformbarkeit) aufweisen und somit ideal zum Warmumformen geeignet sind, d.h. hohe Umformgrade sind unter vergleichsweise geringem Kraftaufwand möglich.

Als Leiterstäbe werden vorzugsweise Kupferstäbe aus sauerstofffreiem gezogenem Elektrokupfer mit einem Leitwert von ca. 58 MS/m eingesetzt. Vorzugsweise sind diese Leiterstäbe in einem mittelharten bis hartem Zustand (60 HB bis 85 HB, wobei HB für Härte Brinell steht), damit eine Verformung oder gar ein Abknicken der Leiterstäbe unter der axialen Fügekraft der Kurzschlussringscheiben vermieden wird. Daraus ergibt sich, dass die Druckfestigkeit des Leiterstabes größer sein muss als die Fließspannung während des Fügevorgangs. Dieser Härtebereich entspricht einer Zugfestigkeit von ca. 300 bis 400 N/mm².

Als Kurzschlussringscheiben werden vorzugsweise Al-Knetlegierungen gewählt, da diese ideal für Warmumformen geeignet sind, da bei relativ hohem Umformvermögen die benötigte Kraft zum Umformen vergleichsweise niedrig ist. So werden z.B. die Materialien EN AW 6082 oder auch EN AW 6060 verwendet. Diese Materialien EN AW 6082 oder auch EN AW 6060 befinden sich insbesondere in einem weichen Werkstoffzustand nach DIN EN 515 z.B. T4. In diesem Zustand sind höchste Umformgrade möglich. T4 beschreibt einen relativ weichen Zustand, der durch Lösungsglühen mit Kaltauslagerung erreicht wird.

Diese Kurzschlussringscheiben werden dabei aus einem strangpressgezogenem Zylinder gewonnen. Dabei sind diese Scheiben in ihrer axialen Breite einstellbar, dies wird durch die Position der Abtrennung auf dem Zylinder erreicht.

Zum betriebssicheren Fügen sind folgende Parameter wie Temperatur sowie Fügegeschwindigkeit und damit auch die Formänderungsgeschwindigkeit je nach miteinander zu koppelnden Materialien z.B. Kupfer, Aluminium oder weitere Materialien einzustellen. Das bedeutet, je nachdem welche Materialkombination gewählt wird, sind die oben genannten Werte unterschiedlich. Verwendet man z.B. eine Al-Legierungsscheibe, also Kurzschlussringscheibe aus einer Al-Knetlegierung, liegen die Temperaturen im Bereich von 500°C. Bei einer Kupferlegierung liegen diese Temperaturen bei ca. 800°C. Es wird auch die Formänderungsgeschwindigkeit und somit die Geschwindigkeit mit der die Kurzschlussringscheibe aufgepresst wird bei unterschiedlichen Materialien unterschiedlich sein.

Richtwerte für Al-Legierungen der Kurzschlussringscheiben sind dabei ein Temperaturbereich von ca. 400 bis 500°C, eine Formänderung im Bereich von 0,5 und eine Formänderungsgeschwindigkeit von 1 bis 4 1/s.

Zur Steigerung der Effizienz und Drehzahltauglichkeit des hergestellten Kurzschlussläufers kann eine gleichzeitige und/oder nachgeschaltete Wärmebehandlung angewandt werden. Durch diese nachgeschaltete Wärmebehandlung, dem sogenannten Tempern lassen sich die mechanischen und elektrischen Materialeingenschaften wie Zugfestigkeit und elektrische Leitfähigkeit steigern. Die Festigkeit steigert sich dadurch, dass durch das Tempern sich feinverteilte Ausscheidungen bilden. Diese Auslagerung findet vorzugsweise bei mäßigen Temperaturen von ca. 140 bis 190°C statt, was auch als Warmauslagern bezeichnet wird.

Dadurch kann beispielsweise Zugfestigkeit und elektrische Leitfähigkeit der Einzelkomponenten aber auch des gesamten Käfigs des Käfigläufers positiv beeinflusst werden.

So wird bei dem Werkstoff EN AW 6060 durch 10-stündiges dauerndes Temperieren bei 185°C eine Steigerung der Dehngrenze von 80 N/mm² auf ca. 200 N/mm² gesteigert. Auch kann die elektrische Leitfähigkeit des Kurzschlussrings von 28 MS/m auf 34 MS/m erhöht werden, da eine Verringerung der Verspannungen im Gitter während der Wärmebehandlung eintritt.

Diese Wärmebehandlung erfolgt beispielsweise durch Lösungsglühen mit anschließendem Abschrecken. Damit wird die Verspannung im Gitter reduziert und "eingefroren". Je geringer das Gitter verspannt ist, desto besser ist die elektrische Leitfähigkeit.

Die Dehngrenze des somit erhaltenen Kurzschlussrings ist um den Faktor 10 höher als die Dehngrenze bei druckgegossenen Kurzschlussringen mit Al 99,6. Dadurch sind höhere Drehzahlen des Läufers der ASM z.B. ohne zusätzliche Bandagen am Kurzschlussring möglich.

Belastet man einen duktilen Werkstoff unterhalb der Dehngrenze (auch Rp-0,2-Dehngrenze genannt), so bildet sich dieser nach Entlastung wieder in seinen Ursprungszustand zurück. Bei höherer Belastung komm es zu einer plastischen Verformung. Bei Beaufschlagung eines Läufers mit hoher Drehzahl wirkt die Fliehkraft auf den Kurzschlussring. Je höher die Dehngrenze ist, desto mehr Sicherheit gegenüber einer plastischen Verformung des Kurzschlussringes besteht.

Durch gezielte Wärmebehandlung kann der im Vergleich zu reinem Aluminium höhere Wert der Dehngrenze nochmals gesteigert werden.

So liegt beispielsweise die Dehngrenze von Al 99.6 bei ca. 20 N/mm², während die Dehngrenze von AlMgSi (EN AW 6060) nach einer Wärmebehandlung bei ca. 200 N/mm² liegt.

Weitere Ausgestaltungen der Erfindung sind beispielsweise eine Kurzschlussringscheibe mit einer geschlossenen äußeren radialen Kontur aus Stahl oder einem anderen Material hoher Zugfestigkeit bzw. Dehngrenze versehen, um mit einer ASM noch höhere Drehzahlen zu erreichen.

Vorteilhafterweise weist die Kurzschlussringscheibe vorgefertigte Aussparungen für die Stäbe auf, was in der Strangpresstechnik einfach herzustellen ist. Dabei ist der geometrische Querschnitt der vorgesehenen Aussparungen geringfügig kleiner als der geometrische Stabquerschnitt eines Leiterstabes, um ein Übermaß und damit eine Mikroverschweißung zwischen Leiterstab und Kurzschlussringscheibe zu erhalten.

Durch diese Maßnahme kann der Umformgrad und die Fügekraft reduziert werden, da die Materialverdrängung reduziert wird.

Die Kupferstäbe sind vorteilhafterweise an den Enden angeschrägt, um eine bessere Zentrierung und eine Reduktion der Fügekraft zu erhalten.

Durch unterschiedliche Winkel an der Anschrägung in der radialen Ebene, kann während des Fügens der Kurzschlussscheibe erreicht werden, dass die Stäbe idealerweise gleichmäßig an den Nutgrund des Blechpakets des Rotors gedrückt werden. Der Winkel außen ist dabei größer bzw. steiler zu wählen als an der Innenseite.

Eine oder mehrere zusätzliche Wuchtscheiben können mit dem Prozess formschlüssig integriert werden. Ebenso ist es möglich, Flügel zur Zirkulation der Luft im Inneren eines Motors als nahezu beliebige Ausgestaltungen an den Kurzschlussring anzuformen.

Die Vorteile dieses Herstellverfahrens sind nunmehr, dass Verunreinigungen im Leiterstab als auch im Kurzschlussring vermieden werden. Es treten keine Lunker auf, die durch einen Gussprozess prozessimmanent auftreten können. Des Weiteren tritt eine elektrisch sichere Verknüpfung zwischen Leiterstab und Kurzschlussring aufgrund einer vollflächigen Mikroverschweißung auf.

Der Kurzschlussring aus Aluminium weist ein geringeres Trägheitsmoment und damit eine höhere Drehzahltauglichkeit aufgrund seiner geringeren Masse gegenüber Kupferkurzschlussringen auf.

Die Erfindung sowie vorteilhafte Ausgestaltungen der Erfindung werden anhand prinzipiell dargestellter Ausführungsbeispiele näher erläutert. Darin zeigen:
- FIG 1: einen prinzipiellen Längsschnitt einer Asynchronmaschine,
- FIG 2 bis 7: prinzipielle Darstellungsformen des Herstellverfahrens,
- FIG 8: in perspektivischer Darstellung einen Kurzschlussläufer mit einem auf einer Seite versehenen Kurzschlussring,
- FIG 9: in perspektivischer Darstellung einen Längsschnitt durch Kurzschlussläufer mit einem auf einer Seite versehenen Kurzschlussring,
- FIG 10: eine weitere Ausführungsform eines Kurzschlussläufers,
- FIG 11: ein Strangpressprofil.

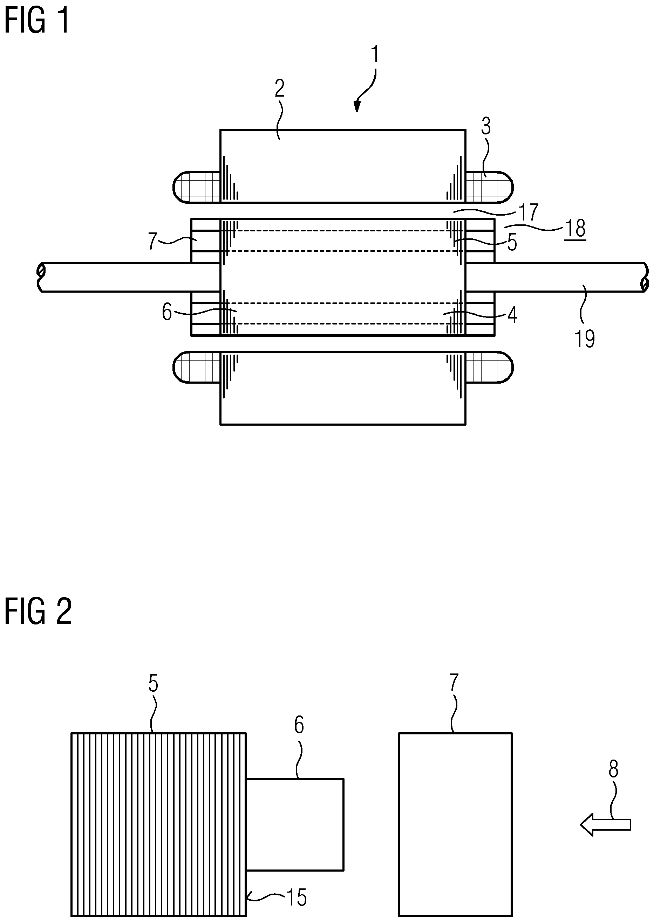

FIG 1 zeigt einen prinzipiellen Längsschnitt einer Asynchronmaschine 1 mit einem Stator 2, der an seinen Stirnseiten ein Wicklungssystem 3 ausbildet, das dort Wickelköpfe ausbildet. Das Wicklungssystem 3 kann dabei beispielsweise aus gesehnten Spulen, Formspulen, Zahnspulen unterschiedlicher oder gleicher Spulenweite aufgebaut sein.

Über einen Luftspalt 17 dieser Asynchronmaschine 1 vom Stator 2 beabstandet, ist ein Rotor 18 angeordnet. Der Rotors 18, der u.a. ein Rotorblechpaket 5 aufweist, weist im Bereich der Stirnseiten 15 des Rotorblechpakets 5 zumindest jeweils einen Kurzschlussring, insbesondere eine Kurzschlussringscheibe 7 auf. Der Kurzschlussring, insbesondere die Kurzschlussringscheibe 7 verbindet und kontaktiert Leiterstäbe 6, die in nicht näher dargestellten Nuten 14 des Rotorblechpakets 5 angeordnet sind.

Der Kurzschlussring, insbesondere die Kurzschlussringscheibe 7 ist dabei, wie in FIG 1 dargestellt, mit einer Welle 19 in Kontakt, was eine thermische Anbindung und damit eine Kühlung des Kurzschlussrings im Betrieb der Asynchronmaschine 1 bewerkstelligt.

Ebenso ist aber auch eine Beabstandung des Kurzschlussrings, insbesondere der Kurzschlussringscheibe 7 von der Welle 19 möglich.

Beabstandungen des Kurzschlussrings, insbesondere eine Kurzschlussringscheibe 7 sind somit von Stirnseite 15 des Rotorblechpakets 5 und/oder der Welle 19 möglich. Es ist ebenso vorstellbar, dass der Kurzschlussring, insbesondere die Kurzschlussringscheibe 7 mit der Stirnseite 15 des Rotorblechpakets 5 und der Welle 19 in Kontakt steht, also jeweils anliegt.

Durch elektromagnetische Wechselwirkung zwischen dem bestromten Stator 2 und einem Kurzschlusskäfig des Rotor 18, der durch die Leiterstäbe 6 und die Kurzschlussringscheiben 7 gebildet wird, tritt eine Drehung der Welle 19 ein.

FIG 2 zeigt in einer prinzipiellen Detaildarstellung das Rotorblechpaket 5, aus dem exemplarisch dargestellt ein Leiterstab 6 ragt und auf dem durch eine axiale Fügekraft 8 eine Kurzschlussringscheibe 7 aufgepresst wird. Dieses axiale Fügen 8 wird vorzugsweise für alle aus einer Stirnseite 15 des Rotorblechpakets 5 ragenden Leiterstäbe 6 gleichzeitig durchgeführt.

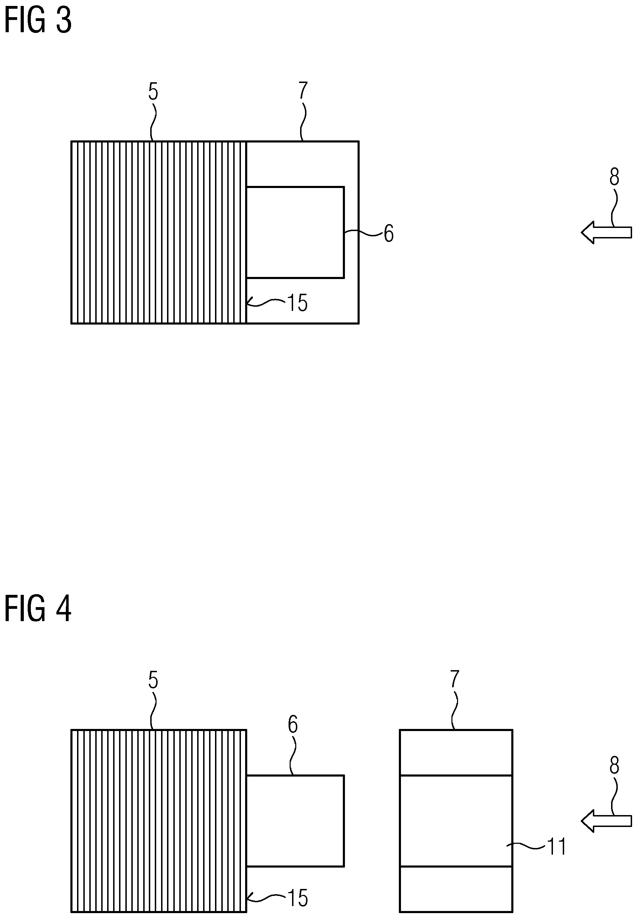

FIG 3 zeigt wie die Kurzschlussringscheibe 7 aus dem Rotorblechpaket 5 ragenden Leiterstab 6 aufgepresst wurde und nun dort mittels Mikroverschweißung elektrisch kontaktiert und fixiert ist. Die Kurzschlussringscheibe 7 liegt dabei nun direkt am Rotorblechpaket 5 an.

FIG 4 zeigt in einer weiteren Ausgestaltung der Erfindung, dass die Kurzschlussringscheibe 7 Ausnehmungen 11 aufweist, die bezüglich des geometrischen Querschnitts des Leiterstabes 6 ein Untermaß aufweisen, so dass eine ausreichende Mikroverschweißung zwischen Leiterstab 6 und Kurzschlussringscheibe 7 eintreten kann. Entscheidend ist dabei u.a., dass die zulässigen Scherspannungen der Materialien von Kurzschlussringscheibe 7 und Leiterstab 6 lokal überschritten werden und es damit zu Stoffübergängen durch Diffusion an der Grenzfläche zwischen Leiterstab 6 und Kurzschlussringscheibe 7 führt.

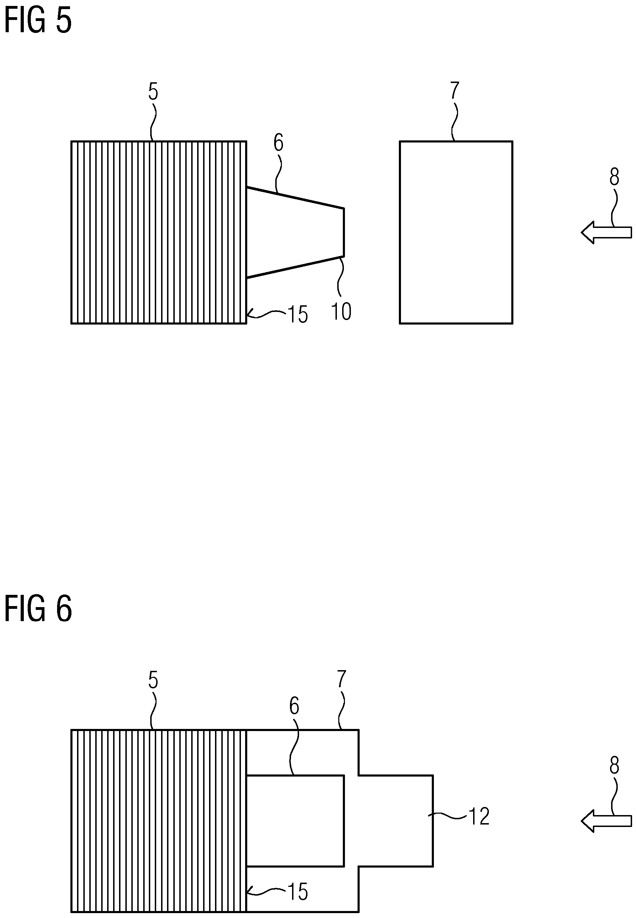

Um den Fügeprozess zu vereinfachen, werden gemäß FIG 5 die Leiterstäbe 6 an ihren aus dem Rotorblechpaket 5 ragenden Leiterstabenden konisch angeformt oder zugespitzt, um den Fügeprozess zu erleichtern, dieses Anfasen ist bei allen Herstellungsarten vorteilhaft.

FIG 6 zeigt im Prinzip einen Fügevorgang gemäß FIG 2 und 3, wobei durch den Fügeprozess ein Materialüberschuss 21 an der Kurzschlussringscheibe 7 entstehen kann, da durch die Materialverdrängung des Leiterstabendes das Material in einen vom Werkzeug zur Verfügung gestellten Freiraum gepresst wird.

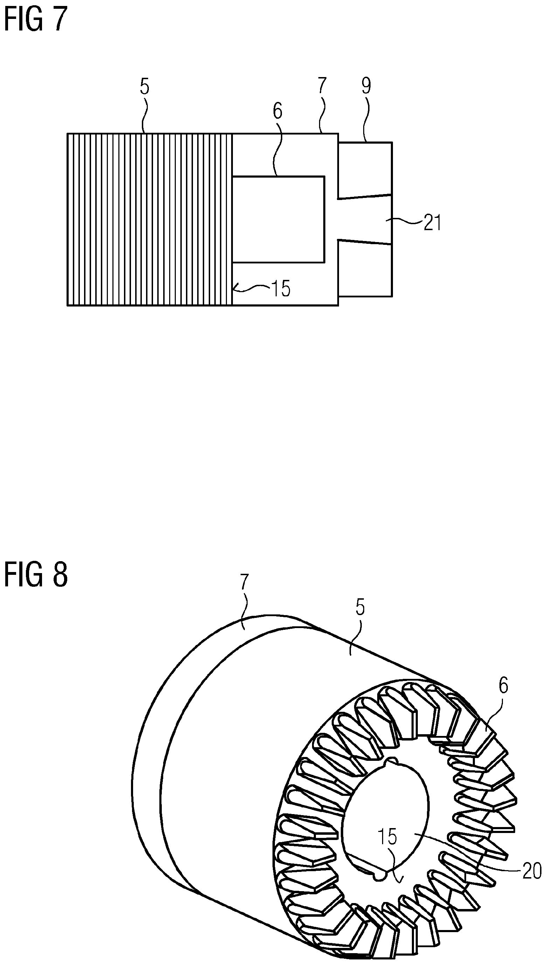

Vorteilhafterweise können dabei, wie dies in FIG 7 beispielhaft dargestellt ist, durch diesen Materialüberschuss 21 auf der dem Rotorblechpaket 5 abgewandten Seite Wuchtelemente 9 aber auch Lüfterflügel 12 mit ausgebildet oder angeformt werden. Dies geschieht dadurch, dass der Materialüberschuss 21 in dementsprechende vorgegebene Matrizen des Werkzeugs oder einer Vorrichtung gedrückt wird.

Ebenso ist es möglich durch den Materialüberschuss 21 zusätzliche Elemente wie Lüfterflügel 12 oder Wuchtelemente 9 auch aus einem anderen Material auf der dem Rotorblechpaket 5 abgewandten Stirnseite der Kurzschlussringscheibe 7 anzuordnen.

FIG 8 zeigt in einer perspektivischen Darstellung das Rotorblechpaket 5, an dessen einen Seite bereits eine Kurzschlussringscheibe 7 angeformt wurde. Auf der anderen Seite des Rotorblechpakets 5 ragen die angefasten Enden der Leiterstäbe 6 aus dem Rotorblechpaket 5, auf die die Kurzschlussringscheibe 7 aufgepresst wird. Ebenso die Wellenbohrung 20 zu sehen, in die später die Welle 19 aufgeschrumpft oder mittels Passfederverbindung drehfest mit dem Rotorblechpaket 5 verbunden wird.

Die Welle 19 kann aber auch schon vor den axialen Fügevorgang 8 von Leiterstäben 6 mit den Kurzschlussringscheiben 7 mit dem Rotorblechpaket 5 drehfest verbunden sein.

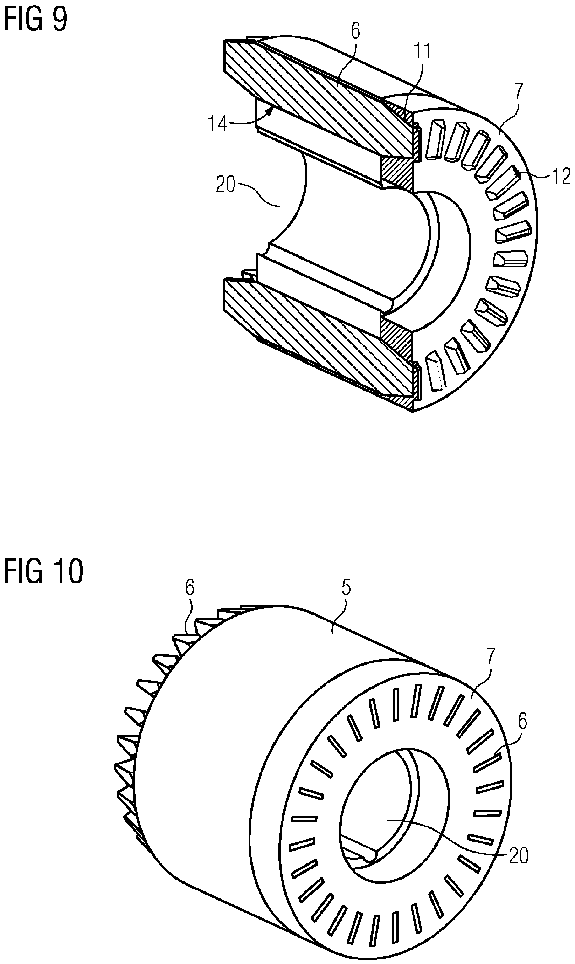

FIG 9 zeigt in einem Längsschnitt das Rotorblechpaket 5, bei dem auf der einen Seite bereits eine Kurzschlussringscheibe 7 auf die Enden der Leiterstäbe 6 axial aufgeschoben wurde, wobei neben der konischen Ausbildung des Leiterstabes 6 auch eine Materialverdrängung 21 in der Kurzschlussringscheibe 7 stattfand, die auf der Stirnseite der Kurzschlussringscheibe 7 lüfterähnliche Flügel 12 ausbildet.

Diese lüfterähnlichen Flügel 12 können auch durch separate Elemente ausgebildet werden, die durch die Materialverdrängung 21 an der Stirnseite der Kurzschlussringscheibe 7 fixiert werden.

Ebenso könne diese lüfterähnlichen Flügel 12 auch mittels eines axialen Durchgriffs der Leiterstäbe 6 durch die Kurzschlussringscheibe 7 gebildet werden.

FIG 10 zeigt in einer weiteren perspektivischen Darstellung die Kurzschlussringscheibe 7 auf dem Rotorblechpaket 5, wobei die dem Rotorblechpaket 5 abgewandten Stirnseite der Kurzschlussringscheibe 7 eben, insbesondere parallel zur Stirnseite des Rotorblechpakets 5 ausgeführt ist. Die Stirnseiten der Enden der Leiterstäbe 6 schließen mit der Stirnseite der Kurzschlussscheibe 7 bündig ab.

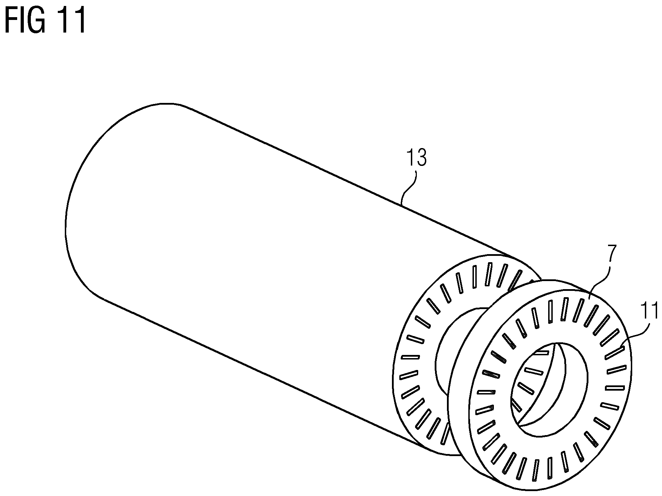

FIG 11 zeigt ein Strangpressprofil aus dem Material des Kurzschlussrings, vorzugsweise aus der Aluminium-Knetlegierung, das auch dementsprechende Ausnehmungen 11 aufweist, und dass je nach Anwendungsgebiet und Performance der Asynchronmaschine 1 (ASM) axial weitere Kurzschlussringscheiben 7 abschneidbar sind.

Auf jeder Stirnseite 15 des Rotorblechpakets 5 können auch mehrere voneinander isoliert angeordnete Kurzschlussringe bzw. Kurzschlussringscheiben 7 angeordnet sein. Elektrisch voneinander isolierte Kurzschlusskäfige im Rotor 18 reduzieren die Oberwellen im Luftspalt 17 des Asynchronmaschine 1, insbesondere wenn der Stator 2 ein Wicklungssystem 3 mit Zahnspulen aufweist, wobei jeder Zahn des Stators 2 von einer Zahnspule umgeben ist.

Derartige Maschinen haben ein breites Einsatzspektrum und werden sowohl für Standard- als auch für Hochdrehzahlanwendungen im Kompressor-, Lüfter- und Pumpenbereich, der Fördertechnik und in der Fahrzeugtechnik eingesetzt und sind somit zuverlässig, effizient und einfach herzustellen. Ebenso sind weitere Antriebsaufgaben möglich.

## Patentansprüche

1. Verfahren zur Herstellung eines Kurzschlussläufers (4) einer Asynchronmaschine (1) durch folgende Schritte:
- Bereitstellen eines Rotorblechpakets (5) mit im Wesentlichen axial verlaufenden Nuten (14),
- einsetzen von Leiterstäben (6) in die Nuten (14) aus einem ersten leitfähigen Material, derart, dass die Leiterstäbe (6) aus den Stirnseiten (15) des Rotorblechpakets (5) ragen,
- Bereitstellen einer Kurzschlussringscheibe (7), aus einem zweiten leitfähigen Material, das über die Rekristallisationstemperatur erwärmt ist,
- axiales Einpressen der Kurzschlussringscheibe (7) auf die aus der Stirnseite (15) des Rotorblechpakets (5) ragenden Leiterstäbe (6) unter Berücksichtigung des Temperaturbereichs, der Formänderung sowie der Formänderungsgeschwindigkeit, wobei die zulässigen Scherspannungen dieser Materialien lokal überschritten werden und wobei Stoffübergänge durch Diffusion an der Grenzfläche zwischen Leiterstab und Kurzschlussring verursacht werden, die zu einer Mikroverschweißung führen,
- anschließendes oder gleichzeitiges Warmumformen der axial aufgeschobenen Kurzschlussringscheibe (7).

2. Verfahren nach Anspruch 1, **dadurch gekennzeichnet, dass** der Temperaturbereich der Kurzschlussringscheibe (7) bei 400 bis 500°C ist, die Formänderung im Bereich von 0,5 und die Formänderungsgeschwindigkeit im Bereich von 1 bis 4 (1/s) liegt.

3. Verfahren nach einem der vorhergehenden Ansprüche, **dadurch gekennzeichnet, dass** das zweite Material vorzugsweise Aluminium, Kupfer oder eine Aluminium- oder Kupferlegierung ist.

4. Verfahren nach einem der vorhergehenden Ansprüche, **dadurch gekennzeichnet, dass** die Leiterstäbe (6) angeschrägt (10) sind.

5. Verfahren nach einem der vorhergehenden Ansprüche, **dadurch gekennzeichnet, dass** die Kurzschlussringscheibe (7) im Bereich der Leiterstäbe (6) Aussparungen (16) aufweist, deren Querschnitt dem der Leiterstäbe (6) entspricht und zumindest abschnittsweise kleiner ausgeführt ist, um eine Mikroverschweißung zwischen Leiterstab (6) und Kurzschlussringscheibe (7) zu gewährleisten.

6. Verfahren nach einem der vorhergehenden Ansprüche, **dadurch gekennzeichnet, dass** zumindest ein Leiterstab (6) aus gezogenem Elektrokupfer mit einem Leitwert von mindestens 58 MS/m vorgesehen ist.

7. Verfahren nach einem der vorhergehenden Ansprüche, **dadurch gekennzeichnet, dass** die Druckfestigkeit des ersten Materials größer ist als die auftretende Fließspannung des zweiten Materials während des Fügevorgangs.

8. Verfahren nach einem der vorhergehenden Ansprüche, **dadurch gekennzeichnet, dass** der Kurzschlussläufer (4) durch eine gleichzeitige und/oder nachträgliche Wärmebehandlung die Dehngrenze der Kurzschlussringscheibe (7) gesteigert wird.

9. Verfahren nach einem der vorhergehenden Ansprüche, **dadurch gekennzeichnet, dass** die Kurzschlussringscheibe (7) als eine von einem Extrudierteil (13) abgetrennte Scheibe vorliegt.

10. Asynchronmaschine (1) mit einem Kurzschlussläufer (4) nach einem der vorhergehenden Ansprüche.

11. Antriebssystem, insbesondere Kompressor, Förderantrieb, oder Fahrzeugantrieb mit zumindest einer Asynchronmaschine (1) nach Anspruch 10.

## Claims

1. Method for producing a squirrel-cage rotor (4) for an asynchronous machine (1) comprising the following steps:
- The provision of a laminated rotor core (5) having essentially axially running grooves (14),
- The insertion of conductor rods (6) into the grooves (14) made from a first conductive material in such a manner that the conductor rods (6) protrude from the end faces (15) of the laminated rotor core (5),
- The provision of a short circuit ring disc (7) made from a second conductive material which is heated above the recrystallization temperature,
- The axial pressing of the short circuit ring disc (7) onto the conductor rods (6) projecting from the end face (15) of the laminated rotor core (5), taking into account the temperature range of deformation and the rate of deformation, wherein the permissible shear stresses of these materials are locally exceeded and wherein material transitions are caused by diffusion at the interface between the conductor rod and the short circuit ring, which lead to microwelding,
- The subsequent or simultaneous hot shaping of the short circuit ring disc (7) which has been axially pressed on.

2. Method according to claim 1,
**characterised in that** the temperature range of the short circuit ring disc (7) is 400 to 500°C, the deformation is in the region of 0.5 and the rate of deformation is in the region of 1 to 4 (1/s).

3. Method according to one of the preceding claims,
**characterised in that**
the second material is preferably aluminium, copper or an aluminium or copper alloy.

4. Method according to one of the preceding claims,
**characterised in that**
the conductor rods (6) are bevelled (10).

5. Method according to one of the preceding claims,
**characterised in that**
the short circuit ring disc (7) has recesses (16) in the region of the conductor rods (6), the cross-section of which corresponds to that of the conductor rods (6) and is at least partially smaller in design in order to ensure microwelding between the conductor rod (6) and the short circuit ring disc (7) .

6. Method according to one of the preceding claims,
**characterised in that**
at least one conductor rod (6) of drawn electro-copper is provided with a conductance of at least 58 MS/m.

7. Method according to one of the preceding claims,
**characterised in that**
the compressive strength of the first material is greater than the yield stress occurring in the second material during the joining process.

8. Method according to one of the preceding claims,
**characterised in that**
the yield strength of the short circuit ring disc (7) of the squirrel-cage rotor (4) is increased by a simultaneous and/or subsequent heat treatment.

9. Method according to one of the preceding claims,
**characterised in that**
the short circuit ring disc (7) is present as a disc separated from an extruding part (13).

10. Asynchronous machine (1) with a squirrel-cage rotor (4) according to one of the preceding claims.

11. Drive system, in particular a compressor, conveyor drive, or vehicle drive with at least one asynchronous machine (1) according to claim 10.

## Revendications

1. Procédé de fabrication d'un rotor (6) à cage d'écureuil d'une machine (1) asynchrone, par les stades suivants :
- on se procure un paquet (5) de tôles rotoriques ayant des encoches (14) s'étendant, pour l'essentiel, axialement,
- on insère, dans les encoches (14), des barreaux (6) conducteurs, en un matériau conducteur, de manière à ce que les barreaux (6) conducteurs fassent saillie des côtés (15) frontaux du paquet (5) de tôles rotoriques,
- on se procure un disque (7) annulaire de court-circuit, en un deuxième matériau conducteur, qui est chauffé au-dessus du point de recristallisation,
- on enfonce axialement le disque (7) annulaire de court-circuit sur les barreaux (6) conducteurs, en saillie du côté (15) frontal du paquet (5) de tôles rotoriques, en tenant compte de la plage de température, de la variation de forme, ainsi que de la vitesse de variation de forme, les tensions de cisaillement admissibles de ces matériaux étant dépassées localement et des transitions de matière par diffusion étant provoquées à la surface limite entre le barreau conducteur et l'anneau de court-circuit, transitions qui donnent une microsoudure,
- on transforme thermiquement ensuite ou simultanément le disque (7) annulaire de court-circuit poussé axialement.

2. Procédé suivant la revendication 1, **caractérisé en ce que** la plage de température du disque (7) annulaire de court-circuit va de 400 à 500°C, la variation de forme est dans la plage de 0,5 et la vitesse de variation de forme est dans la plage de 1 à 4 (1/s).

3. Procédé suivant l'une des revendications précédentes, **caractérisé en ce que** le deuxième matériau est, de préférence, l'aluminium, le cuivre ou un alliage d'aluminium ou un alliage de cuivre.

4. Procédé suivant l'une des revendications précédentes, **caractérisé en ce que** les barreaux (6) conducteurs sont biseautés (10).

5. Procédé suivant l'une des revendications précédentes, **caractérisé en ce que** le disque (7) annulaire de court-circuit a, dans la région des barreaux (6) conducteurs, des évidements (16), dont la section transversale correspond à celle des barreaux (6) conducteurs et est réalisée plus petite, au moins par endroits, afin d'assurer une microsoudure entre le barreau (6) conducteur et le disque (7) annulaire de court-circuit.

6. Procédé suivant l'une des revendications précédentes, **caractérisé en ce qu'**au moins un barreau (6) conducteur est prévu en cuivre électrique étiré ayant une conductance d'au moins 58 MS/m.

7. Procédé suivant l'une des revendications précédentes, **caractérisé en ce que** la résistance à la pression du premier matériau est plus grande que la contrainte d'écoulement, qui se produit pendant l'opération de jonction.

8. Procédé suivant l'une des revendications précédentes, **caractérisé en ce que**, dans le rotor (4) à cage d'écureuil, on augmente la limite élastique du disque (7) annulaire de court-circuit par un traitement thermique simultané et/ou postérieur.

9. Procédé suivant l'une des revendications précédentes, **caractérisé en ce que** le disque (7) annulaire de court-circuit se présente sous la forme d'un disque séparé d'une pièce (13) extrudée.

10. Moteur (1) asynchrone ayant un rotor (4) de court-circuit suivant l'une des revendications précédentes.

11. Système d'entraînement, notamment compresseur, entraînement de convoyage ou entraînement de véhicule, ayant au moins un moteur (1) asynchrone suivant la revendication 10.
